# EUROPEAN PATENT APPLICATION

(11) **EP 4 468 677 A1**
(43) Date of publication of application: **27.11.2024**
(21) Application number: 23747352.5
(22) Date of filing: 26.01.2023
(51) Int. Cl.: H04L 47/11, H04L 47/2483, H04L 47/25, H04L 47/10, H04W 28/02

(54) **METHOD AND APPARATUS FOR SUPPORTING PACKET PROCESSING IN NETWORK CONGESTION SITUATION**

(30) Priority: 27.01.2022 KR 20220012744
(71) Applicant: Samsung Electronics Co., Ltd., Gyeonggi-do, 16677 (KR)
(72) Inventor: KIM, Hyesung, Suwon-si Gyeonggi-do 16677 (KR); LEE, Jicheol, Suwon-si Gyeonggi-do 16677 (KR)
(74) Representative: Nederlandsch Octrooibureau
(86) International application number: PCT/KR2023/001214
(87) International publication number: WO 2023/146311

(57) **Abstract**

The present disclosure relates to a 5G or 6G communication system for supporting a higher data transmission rate. A method for operation of a session management function (SMF) in a wireless communication system, according to an embodiment of the present disclosure, may comprise the steps of: selecting a user plane function (UPF) that supports a processing function for a network congestion experienced packet; transmitting, to an access and mobility management function (AMF), a first message including a quality of service (QoS) profile, a QoS flow ID (QFI), and processing information regarding the network congestion experienced packet; and receiving, from the AMF, a second message including information regarding whether or not a processing operation for the network congestion experienced packet has been activated.

## Description

### [Technical Field]

The disclosure relates to a wireless communication system and, more particularly, to a method of processing a packet in a network congestion situation.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G.

In the initial stage of 5G mobile communication technologies, in order to support services and to satisfy performance requirements in connection with enhanced Mobile BroadBand, (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there is ongoing discussion regarding improvement and performance enhancement of initial 5G mobile communication technologies in view of services to be supported by 5G mobile communication technologies, and there has been physical layer standardization regarding technologies such as V2X for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is impossible, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR, VR, and the like (XR = AR + VR + MR), 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

The disclosure provides a method of processing a packet in a network congestion situation or a situation where network congestion is expected. Specifically, the disclosure provides a method of performing, between a network entity and a user equipment, transmission or reception of processing policies or rule information associated with a packet that experiences network congestion situations.

### [Technical Solution]

A method for operation of a session management function (SMF) in a wireless communication system according to an embodiment of the disclosure may include an operation of selecting a user plane function (UPF) that supports a function of processing a network congestion experienced packet, an operation of transmitting, to an access and mobility management function (AMF), a first message including a quality of service (QoS) profile, a QoS flow ID (QFI), and processing information associated with the network congestion-experienced packet, and an operation of receiving, from the AMF, a second message including information associated with whether to activate processing of the network congestion-experienced packet.

An SMF in a wireless communication system according to an embodiment of the disclosure may include a transceiver and a controller. The controller may select a user plane function (UPF) that supports a function of processing a network congestion experienced packet, may perform control so as to transmit, to an access and mobility management function (AMF), a first message including a quality of service (QoS) profile, a QoS flow ID (QFI), and processing information associated with the network congestion-experienced packet; and may perform control so as to receive, from the AMF, a second message including information associated with whether to activate processing of the network congestion-experienced packet.

### [Advantageous Effects]

A method and apparatus according to an embodiment of the disclosure may not drop a packet that experiences a network congestion situation but mark a network congestion situation on the packet, and may configure a method of processing the packet that experiences a network congestion situation in a RAN, a UE, and a UPF.

In addition, a method and apparatus according to an embodiment of the disclosure may indicate a network congestion situation to a corresponding packet, and may transfer the corresponding indication information to an application in a UE or an application server.

In addition, a method and apparatus according to an embodiment of the disclosure may indicate a network congestion situation to a corresponding packet so that an application can adjust a transmission rate and support low latency low loss scalable throughput.

### [Brief Description of Drawings]

FIG. 1 is a diagram illustrating the structure of a communication system according to an embodiment of the disclosure;
FIG. 2 is a diagram illustrating a method of providing network congestion-experienced packet processing information according to an embodiment of the disclosure;
FIG. 3 is a diagram illustrating a process of configuring a policy for processing a network congestion-experienced packet according to an embodiment of the disclosure;
FIG. 4 is a diagram illustrating a method of configuring or selecting a UPF that supports a network congestion-experienced packet processing function according to an embodiment of the disclosure;
FIG. 5 is a diagram illustrating the structure of a network function (or network entity) according to an embodiment of the disclosure; and
FIG. 6 is a diagram illustrating the structure of a user equipment (UE) according to an embodiment of the disclosure.

### [Mode for Carrying out the Invention]

Hereinafter, the operation principle of the disclosure will be described in detail in conjunction with the accompanying drawings. The terms which will be described below are terms defined in consideration of the functions in the disclosure. They may be different according to users, intentions of the users, or customs, and therefore, the definitions of the terms should be made based on the contents throughout the specification.

As used herein, terms referring to network entities and objects of an edge computing system, terms referring to messages, terms referring to identification information, and the like are illustratively used for the sake of descriptive convenience. Therefore, the disclosure is not limited by the terms as described below, and other terms referring to subjects having equivalent technical meanings may also be used.

In the following description of the disclosure, terms and names defined in the 5G system standards will be used for the sake of convenience, but the disclosure is not limited by these terms and names and may be applied in the same way to systems that conform other standards.

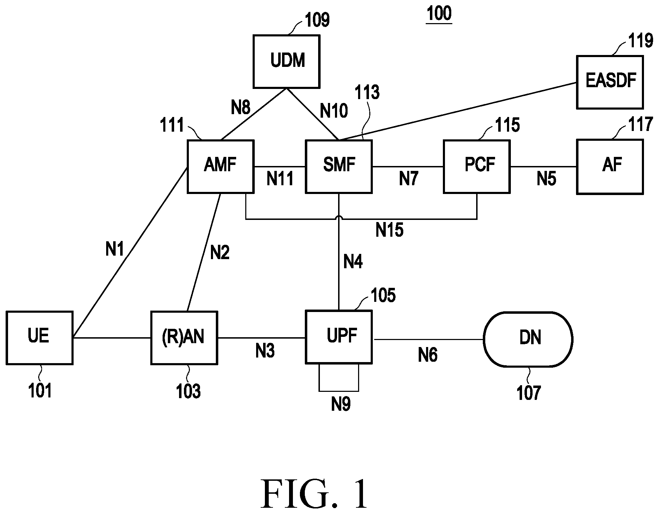

FIG. 1 is a diagram illustrating the structure of a communication system according to an embodiment of the disclosure.

A 5G communication system 100 that supports an edge computing system may include various network functions (NF) or network entities.

Referring to FIG. 1, the 5G communication system 100 may include a user equipment (UE) 101, a (radio) access network ((R)AN) 103, a user plane function (UPF) 105, a data network (DN) 107, a unified data management (UDM) 109, an access and mobility management function (AMF) 111, a session management function (SMF) 113, a policy control function (PCF) 115, an application function (AF) 117, and an edge application server discovery function (EASDF) 119.

Each NF may support functions as follows.
- The AMF 111 may provide a UE 101-level access and mobility management function, and a single AMF may be basically accessed by a single UE 101.
- The DN 107, for example, may be a 5GS external network where an operator service, an Internet access or 3rd party service, or the like exist. The DN 107 may transmit a downlink protocol data unit (PDU) to the UPF 105, or may receive, from the UPF 105, a PDU transmitted from the UE 101.
- The PCF 115 may receive information associated with a packet flow from an application server, and may provide a function of determining policies associated with mobility management, session management, and the like. Particularly, the PCF 115 may support functions such as supporting of a unified policy framework to control network operations, providing of policy rules so that a control plane function(s) (e.g., the AMF 111, the SMF 113, and the like) enforces the policy rules, and implementing of a front end for accessing related subscription information for determining a policy in a user data repository (UDR).
- The SMF 113 may provide a session management function, and in the case in which the UE 101 has a plurality of sessions, each session may be managed by each different SMF.
- The UDM 109 may store user subscription data, policy data, and the like.
- The UPF 105 may transfer a downlink PDU received from the DN 107 to the UE 101 via the (R)AN 103, and may transfer, to the DN 107, an uplink PDU received from the UE 101 via the (R)AN 101.

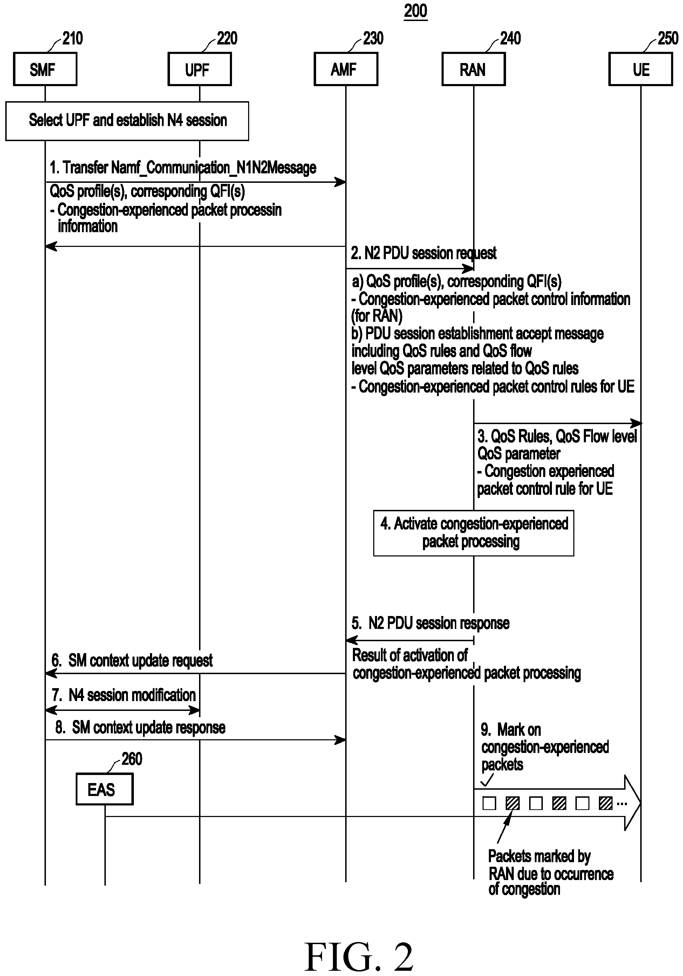

FIG. 2 is a diagram illustrating a method of providing network congestion-experienced packet processing information according to an embodiment of the disclosure.

Referring to FIG. 2, a communication system 200 may include an SMF 210, a UPF 220, an AMF 230, a RAN 240, a UE 250, and an edge application server (EAS) 260.

Before performing operations of FIG. 2, pre-operations described below may be performed in the communication system 200.

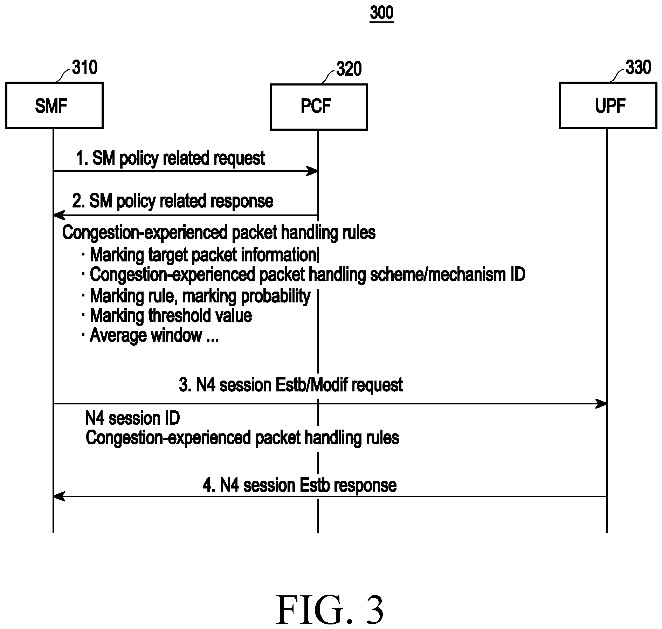

The SMF 210 may obtain at least one among session management and QoS related policy information received from a PCF or a local configuration, or network congestion-experienced packet processing information obtainable from a UDM. The SMF 210 may select the UPF 220 and may successfully perform N4 session establishment, and a detailed description thereof will be provided with reference to the embodiment of FIG. 3.

Referring to FIG. 2, in operation 1, the SMF 210 may transmit, to the AMF 230, a QoS profile, a QoS flow ID (QFI), a network congestion experience packet processing information, generated (or determined) based on the QoS related policy information received from the PCF or the local configuration, or the congestion-experienced packet processing-related subscriber information obtainable from the UDM.

According to an embodiment, the network congestion-experienced packet processing information may be included in a QoS profile.

According to an embodiment, a QFI value provided by the SMF 210 may be the same as a 5QI value corresponding to a QoS flow that needs to support low latency low loss scalable throughput.

According to an embodiment, the network congestion-experienced packet processing information may include at least one among processing target packet information, a network congestion-experienced packet processing execution indicator, a network congestion-experienced packet processing scheme index or rule indicator for an RAN, a network congestion-experienced packet processing rule, and a network congestion-experienced packet processing rule for a UE.

Detailed descriptions of the processing target packet information, the network congestion-experienced packet processing execution indicator, the network congestion-experienced packet processing scheme index or rule indicator for a RAN, the network congestion-experienced packet processing rule, and the network congestion-experienced packet processing rule for a UE, are as follows.

Processing target packet information: 5QI or QFI, in the case in which processing target packet information is not included, the RAN 240 may determine, as a processing target packet, a packet corresponding to a QoS flow identified based on a QFI to which a QoS profile is mapped.

Network congestion-experienced packet processing execution indicator and network congestion-experienced packet processing scheme index or rule identifier for an RAN:

The SMF 210 may identify, from an operator's configuration or the like, an index for a network congestion-experienced packet processing scheme or mechanism which is applicable to the RAN 240.

Alternatively, the SMF 210 may receive, from a PCF, network congestion-experienced packet processing scheme or mechanism index information. Alternatively, the SMF 210 may transmit, to the AMF 230, the network congestion-experienced packet processing scheme or mechanism index information included in predetermined UE subscriber information obtainable from the UDM.

For example, a packet processing method specified by the corresponding scheme or mechanism index may include an operation of performing marking on a packet that experiences (is expected to experience) a congestion situation, such as an explicit congestion notification, or the like.

According to an embodiment, the RAN 240 may identify a packet processing operation corresponding to a network congestion-experienced packet processing scheme or mechanism index, and may apply the same to a packet of a network congestion-experienced packet processing target QoS flow (a QoS flow corresponding to a QFI value mapped to the network congestion-experienced packet processing information). Specifically, in the RAN 240, a criterion for occurrence of congestion may be configured based on a network congestion-experienced packet processing scheme index. For example, in the case in which a queuing delay calculated by a scheduler in a lower layer of the RAN 240, a channel state between the RAN 240 and the UE 250, or quality does not meet a predetermined level, congestion occurrence may be marked on corresponding packets. A method of marking congestion occurrence on a packet may also be performed according to an operation defined by a network congestion-experienced packet processing scheme index. For example, a layer (e.g., a packet data convergence protocol layer) where marking on a packet is to be performed may be defined. As another example, the RAN 240 may transmit a notification associated with a QoS flow where network congestion has occurred, which has been described above, to the UPF 220 via the AMF 230 and the SMF so that the UPF 220 may configure a congestion encountered bit in the IP header of a packet.

Network congestion-experienced packet processing rules: may provide detailed operation rules (e.g., explicit congestion notification enforcement rule) in addition to a network congestion-experienced packet processing scheme index. For example, the following parameters may be included.

This may be specified as one of a packet marking rule, a network congestion handling rule, or a network congestion-experienced packet handling rule, and may be bound to a packet detection rule for use.

Marking probability (a probability value in the range of a specific probability of 0 to 1) or marking rule (e.g., marking at a ratio proportional to a queue length or marking in proportion to a queuing delay).

Network congestion experience marking threshold value: expressed as a queuing delay, a queuing length value, an average transmission rate, or a channel state information value. When a network congestion level reaches a threshold value (e.g., when a queuing length or delay exceeds a threshold value or when an average transmission rate or channel state information value is decreased less than a threshold value), marking associated with a corresponding flow may be performed according to a marking probability or marking rule. The queuing delay, queuing length value, and the average transmission rate may be calculated and applied during the following averaging window length provided together with a network congestion-experienced packet processing rule.

Averaging window for calculating network congestion level.

DL marking or UL marking: indicates whether to perform marking with respect to an uplink or a downlink.

Network congestion-experienced packet processing rules for a UE: includes a network congestion-experienced packet processing scheme or mechanism index value or a detailed operation, which are applicable in the UE 250. For example, a method of marking congestion occurrence on a corresponding packet in the case in which a queuing delay is increased in an uplink (e.g., the above-described marking probability, marking threshold value, and the like) may be included.

In operation 2 of FIG. 2, the AMF 230 may transfer, to the RAN 240, at least one among the QoS profile, the QFI, and the network congestion-experienced packet processing information.

In operation 3 of FIG. 2, the RAN 240 may perform an operation (e.g., activating network congestion-experienced packet processing) based on the QoS profile and the network congestion-experienced packet processing information received from the AMF 230.

In operation 4 of FIG. 2, the RAN 240 may transmit a PDU session establishment accept message to the UE 250. In the corresponding PDU session establishment accept message, at least one among a QoS rule, a QoS flow level QoS parameter, and a network congestion-experienced packet processing rule for a UE may be included. The UE 250 may activate an operation specified in the network congestion-experienced packet processing rule for a UE received from the RAN 240, and may transmit, to the RAN 240, whether activation is successfully performed.

In operation 5 of FIG. 2, the RAN 240 may transmit, to the AMF 230, information associated with whether network congestion-experienced packet processing is successfully activated in each of the RAN 240 and the UE 250. The corresponding message may be included in a N2 PDU session response message.

In operation 6 of FIG. 2, the AMF 230 may transmit, to the SMF 210, the information associated with whether network congestion-experienced packet processing is successfully activated, received from the RAN 240, together with RAN address information.

In operation 7 of FIG. 2, the SMF 210 may perform an N4 session modification procedure for finishing configuration of the connection between the RAN 240 and the UPF 220.

In operation 8 of FIG. 2, the SMF 210 may include CN tunnel information in a response message of operation 6, and may transmit the same to the AMF 230.

Upon completion of the operation, the RAN 240 may process a network congestion-experienced packet received from the SMF 210 when a network congestion situation occurs.

In operation 9 of FIG. 2, the EAS 260 transmits a packet, and the RAN 240 may perform marking on a received packet based on the network congestion-experienced packet processing information received in operation 3. The RAN 240 may transmit the marked network congestion-experienced packet to the UE 250.

FIG. 3 is a diagram illustrating a process of configuring a policy for processing a network congestion-experienced packet according to an embodiment of the disclosure.

Referring to FIG. 3, a communication system 300 may include an SMF 310, a PCF 320, and a UPF 330.

In operation 1 of FIG. 3, the SMF 310 may request a session management policy from the PCF 320 during a PDU session establishment or modification procedure.

In operation 2 of FIG. 3, the PCF 320 may provide, to the SMF 310, a network congestion-experienced packet processing policy for a corresponding session.

According to an embodiment, the network congestion-experienced packet processing policy may include at least one among processing target packet information, a network congestion-experienced packet processing execution indicator, a network congestion-experienced packet processing scheme index or rule indicator, and a network congestion-experienced packet processing rule.

Detailed descriptions of the processing target packet information, the network congestion-experienced packet processing execution indicator, the network congestion-experienced packet processing scheme index or rule indicator, and the network congestion-experienced packet processing rule are as follows.

Processing target packet information:
A source interface (core side, access side, or N6-Lan, or 5G VN internal and the like), a UE IP address, a DNN, an S-NSSAI, an app ID, a 5-tuple value, a 5QI or QoS Flow ID (QFI) value, and framed route information.

According to an embodiment, a QFI or 5QI value for a QoS flow that needs to support a low latency low loss scalable throughput may be configured.

Network congestion-experienced packet processing execution indicator and network congestion-experienced packet processing scheme index or rule identifier: The PCF 320 may identify, from an operator's configuration or the like, an index for a network congestion-experienced packet processing scheme or mechanism which is applicable to the UPF 330. A packet processing method specified by a corresponding scheme or mechanism index may include, for example, an operation of performing marking on a packet that experiences (is expected to experience) a congestion situation, such as an explicit congestion notification, or the like.

Network congestion-experienced packet processing rule: According to an internal configuration or operator policy, the PCF 320 may provide a detailed operation rule (e.g., explicit congestion notification enforcement rule) in addition to a network congestion-experienced packet processing scheme index. For example, the following parameters may be included.

A network congestion-experienced packet processing rule may be included as part of rule information of QoS Enforcement Rule. Alternatively, it may be provided as a separate rule. For example, this may be specified as one of a packet marking rule, a network congestion handling rule, or a network congestion-experienced packet handling rule, and may be bound to a packet detection rule for use.

Marking probability (a probability value in the range of a specific probability of 0 to 1) or marking rule (e.g., marking at a ratio proportional to a queue length or marking in proportion to a queuing delay).

Network congestion experience marking threshold value: expressed as a queuing delay or a queuing length value. In the case of a value in excess of a threshold value, marking with respect to a corresponding flow may be performed according to a marking probability or a marking rule. The queuing delay and queuing length value may be calculated and applied during the following averaging window length provided together with the network congestion-experienced packet processing rule.

Averaging window for calculating network congestion level.

DL marking or UL marking: indicates whether to perform marking with respect to an uplink or a downlink.

Correlated packet detection rule (PDR) information: Rule ID of a PDR bound.

In operation 3 of FIG. 3, in the case in which a network congestion-experienced packet processing policy is provided from the PCF 320, the SMF 310 may select the UPF 330 that supports a corresponding function when selecting a UPF, and may configure the network congestion-experienced packet processing policy to the selected UPF 330. In addition, the SMF 310 may request a UPF that supports a network congestion-experienced packet processing function from an NRF or SCP, when performing the network congestion-experienced packet processing policy configured in the selected UPF 330, for example, a UPF discovery and selection operation.

According to an embodiment, the SMF 310 may select the UPF 330 that supports a corresponding function among available UPFs. According to an embodiment, when the UPF 330 or OAM configures a UPF available for an NRF, whether network congestion-experienced packet processing function is supported may be specified. A detailed description thereof will be provided with reference to operations in FIG. 3.

In operation 4 of FIG. 3, the UPF 330 may provide, to the SMF 310, a response indicating that an N4 session is successfully established and an N4 session context is generated.

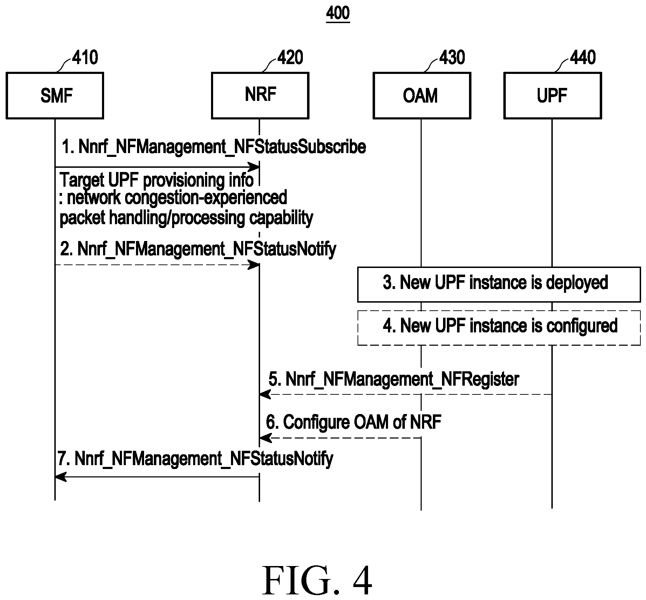

FIG. 4 is a diagram illustrating a method of configuring or selecting a UPF that supports a network congestion-experienced packet processing function according to an embodiment of the disclosure.

Referring to FIG. 4, a communication system 400 may include an SMF 410, an NRF 420, an OAM 430, and a UPF 440.

In operation 1 of FIG. 4, the SMF 410 may transmit a subscribe request message to the NRF 420 so as to receive a notification indicating that a UPF capable of supporting a network congestion-experienced packet processing function becomes available. According to an embodiment, the SMF 410 may specify a network congestion-experienced packet processing function in target UPF provisioning info in an NRF status subscribe request message, and may transmit the same to the NRF 420. According to an embodiment, at least one among a data network access identifier, a service area, a data network name, and network slice information (S-NSSAI) may be additionally included in target UPF provisioning info. Therefore, only information associated with a UPF capable of supporting a network congestion-experienced packet processing function may be obtained among UPFs responsible for traffic associated with a predetermined area, or predetermined data network, or a predetermined data center. According to an embodiment, the target UPF provisioning info may include information indicating whether a function capable of processing a QoS flow that supports a low latency low loss scalable throughput is supported.

In operation 2 of FIG. 4, the NRF 420 may transmit, to the SMF 410, a response message including a subscribe indicator.

In operation 3 of FIG. 4, a UPF 440 that supports the network congestion-experienced packet processing function may be deployed by the OAM 430.

In operation 4 of FIG. 4, NRF information associated with registration to be performed by the OAM 430 may be configured in the deployed UPF 440. According to an embodiment, UPF provisioning information including information associated with functions supported by the corresponding UPF may also be included (or configured). According to an embodiment, the UPF provisioning information may include information such as a data network access identifier, a service area, a data network name, and network slice information (S-NSSAI) and the like.

In operation 5 of FIG. 4, the UPF 440 of which installation and configuration have been completed may transmit a registration request message to the NRF 420. The corresponding request message may include at least one among an NF type, N4 interface address information, and the UPF provisioning information including whether network congestion-experienced packet processing function is supportable in the above-described operation. According to an embodiment, the UPF provisioning information may additionally include at least one piece of information among a data network access identifier, a service area, a data network name, and network slice information (S-NSSAI) and the like.

In operation 6 of FIG. 4, as another example, without performing operation 4 and operation 5, the OAM 430 may directly register the deployed UPF with the NRF 420. The OAM 430 may configure, in the NRF 420, at least one among an NF type, N4 interface address information, and the above-described UPF provisioning information associated with the corresponding UPF 440.

In operation 7 of FIG. 4, the NRF 420 may transmit, to the SMF 410, a notification including UPF information that matches subscription in operation 1. The corresponding notification message may include UPF provisioning information and the like registered in the NRF.

According to an embodiment, in the case in which the UPF 440 that supports a network congestion-experienced packet processing function is registered/configured in the NRF 420, the SMF 410 may receive information associated with the UPF 440 that is available and supports the corresponding function from the NRF 420 when the SMF 410 includes a network congestion-experienced packet processing function request indicator (additionally, a data network access identifier, a service area, a data network name, network slice information (S-NSSAI) and the like which are information for requesting a UPF that supports a predetermined location, data network, or data center) in an NF discovery request message and transmits the same to the NRF 420.

According to an embodiment, a UDM may include a QoS profile associated with a QoS flow in which a home PLMN is capable of providing, to a predetermined UE subscriber, a marking function (e.g., an explicit congestion notification operation) in association with a network congestion-experienced packet may be stored in a UDM.

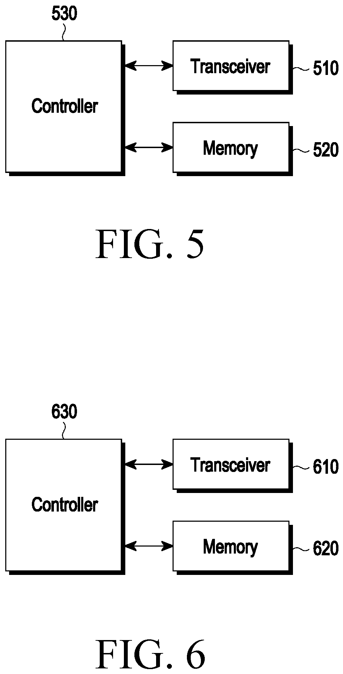

FIG. 5 is a diagram illustrating the structure of a network function (or network entity) according to an embodiment of the disclosure.

Each of an SMF, a UPF, an AMF, an RAN, a PCF, an NRF, and an OAM described with reference to FIGS. 1 to 4 may correspond to a network function (or network entity) of FIG. 5. Referring to FIG. 5, the network function (or network entity) may include a transceiver 510, memory 520, and a controller 530.

According to a communication method of the above-described network function (or network entity), the transceiver 510, the controller 530, and the memory 520 of the network function (or network entity) may operate. However, the component elements of the network function (or network entity) are not limited to the above-descried example. For example, the network function (or network entity) may include more or fewer component elements than the above-described component elements. In addition, the transceiver 510, the controller 530, and the memory 520 may be embodied as a single chip. In addition, the controller 530 may include one or more processors.

The transceiver 510 is a comprehensive term including a receiver of the network function (or network entity) and a transmitter of the network function (or network entity), and performs signal transmission or reception with another device. To this end, the transceiver 510 may include an RF transmitter that up-converts and amplifies the frequency of a transmitted signal, an RF receiver that low-noise amplifies a received signal and down-converts the frequency of the signal, and the like. This is merely an example of the transceiver 510, and the component elements of the transceiver 510 are not limited to the RF transmitter and the RF receiver.

In addition, the transceiver 510 may receive a signal via a wireless channel and output the same to the controller 530, and may transmit a signal output from the controller 530 via a wireless channel.

The memory 520 may store a program and data needed when the network function (or network entity) operates. In addition, the memory 520 may store control information or data included in a signal obtained by the network function (or network entity). The memory 520 may be embodied as a storage medium such as ROM, RAM, a hard disk, CD-ROM, a DVD, and the like, or a combination of storage media. In addition, the memory 520 may be included in the controller 530, instead of being configured as a separately entity.

The controller 530 may control a series of processes so that the network function (or network entity) operates according to the above-described embodiment of the disclosure.

The controller 530 may select a user plane function (UPF) that supports a function of processing a network congestion experienced packet.

The controller 530 may perform control so as to transmit, to an access and mobile management function (AMF), a first message including a quality of service (QoS) profile, a QoS flow ID (QFI), and processing information associated with the network congestion-experienced packet.

The controller 530 may perform control so as to receive, from the AMF, a second message including information associated with whether to activate processing of the network congestion-experienced packet.

FIG. 6 is a diagram illustrating the structure of a user equipment (UE) according to an embodiment of the disclosure.

A UE (or a terminal) described with reference to FIG. 1 to FIG. 4 may correspond to the UE of FIG. 6. Referring to FIG. 6, the UE may include a transceiver 610, memory 620, and a controller 630.

According to the above-described communication method of the UE, the transceiver 610, the controller 630, and the memory 620 of the UE may operate. However, the component elements of the UE are not limited to the above-descried example. For example, the UE may include more or fewer component elements than the above-described component elements. In addition, the transceiver 610, the controller 630, and the memory 620 may be embodied as a single chip. In addition, the controller 630 may include one or more processors.

The transceiver 610 is a comprehensive term including a receiver of the UE and a transmitter of the UE, and may perform signal transmission or reception with another device. To this end, the transceiver 610 may include an RF transmitter that up-converts and amplifies the frequency of a transmitted signal, an RF receiver that low-noise amplifies a received signal and down-converts the frequency of the signal, and the like. This is merely an example of the transceiver 610, and the component elements of the transceiver 610 are not limited to the RF transmitter and the RF receiver.

In addition, the transceiver 610 may receive a signal via a wireless channel and output the same to the controller 630, and may transmit a signal output from the controller 630 via a wireless channel.

The memory 620 may store a program and data needed when the UE operates. In addition, the memory 620 may store control information or data included in a signal obtained by the UE. The memory 620 may be embodied as a storage medium such as ROM, RAM, a hard disk, CD-ROM, a DVD, and the like, or a combination of storage media. In addition, the memory 620 may be included in the controller 630, instead of being configured as a separately entity.

The controller 630 may control a series of processes such that the UE operates according to the above-described embodiments of the disclosure.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

In addition, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method for operation of a session management function (SMF) in a wireless communication system, the method comprising:
selecting a user plane function (UPF) that supports a function of processing a network congestion experienced packet;
transmitting, to an access and mobility management function (AMF), a first message including a quality of service (QoS) profile, a QoS flow ID (QFI), and processing information associated with the network congestion-experienced packet; and
receiving, from the AMF, a second message including information associated with whether to activate processing of the network congestion-experienced packet.

2. The method of claim 1, wherein the processing information associated with the network congestion-experienced packet comprises at least one among processing target packet information, a processing execution indicator for the network congestion-experienced packet, a network congestion-experienced packet processing scheme index or rule indicator for an RAN, a processing rule for the network congestion-experienced packet, and a network congestion-experienced packet processing rule for a UE.

3. The method of claim 1, wherein the processing rule for the network congestion-experienced packet comprises a marking probability, a marking threshold value, and an averaging window for calculating a network congestion level.

4. The method of claim 1, further comprising:
performing an N4 session modification procedure for establishing a connection between a radio access network (RAN) and the UPF.

5. A method for operation of an access and mobility management function (AMF) in a wireless communication system, the method comprising:
receiving, from a session management function (SMF), a first message including a quality of service (QoS) profile, a QoS flow ID (QFI), and processing information associated with a network congestion experienced packet; and
transmitting, to the SMF, a second message including information associated with whether to activate processing of the network congestion-experienced packet,
wherein a user plane function (UPF), which supports a function of processing the network congestion-experienced packet, is selected by the SMF.

6. The method of claim 5, wherein the processing information associated with the network congestion-experienced packet comprises at least one among processing target packet information, a processing execution indicator for the network congestion-experienced packet, a network congestion-experienced packet processing scheme index or rule identifier for a radio access network (RAN), a processing rule for the network congestion-experienced packet, and a network congestion-experienced packet processing rule for a user equipment (UE).

7. The method of claim 5, further comprising:
transmitting, to a radio access network (RAN), at least one among the QoS profile, the QFI, and the processing information associated with the network congestion-experienced packet.

8. The method of claim 7, further comprising:
receiving, from the RAN, information associated with whether processing of the network congestion-experienced packet is successfully activated in each of the RAN and the user equipment (UE).

9. A session management function (SMF) in a wireless communication system, the SMF comprising:
a transceiver; and
a controller,
wherein the controller is configured to:
select a user plane function (UPF) that supports a function of processing a network congestion experienced packet;
perform control so as to transmit, to an access and mobility management function (AMF), a first message including a quality of service (QoS) profile, a QoS flow ID (QFI), and processing information associated with the network congestion-experienced packet; and
receive, from the AMF, a second message including information associated with whether to activate processing of the network congestion-experienced packet.

10. The SMF of claim 9, wherein the processing information associated with the network congestion-experienced packet comprises at least one among processing target packet information, a processing execution indicator for the network congestion-experienced packet, a network congestion-experienced packet processing scheme index or rule identifier for a radio access network (RAN), a processing rule for the network congestion-experienced packet, and a network congestion-experienced packet processing rule for a user equipment (UE).

11. The SMF of claim 9, wherein the processing rule for the network congestion-experienced packet comprises a marking probability, a marking threshold value, and an averaging window for calculating a network congestion level.

12. The SMF of claim 9, wherein the controller is configured to perform an N4 session modification procedure for establishing a connection between a radio access network (RAN) and the UPF.

13. An access and mobility management function (AMF) in a wireless communication system, the AMF comprising:
a transceiver; and
a controller,
wherein the controller is configured to:
perform control so as to: receive, from a session management function (SMF), a first message including a quality of service (QoS) profile, a QoS flow ID (QFI), and processing information associated with a network congestion-experienced packet; and
transmit, to the SMF, a second message including information associated with whether to activate processing of the network congestion-experienced packet, and
wherein a user plane function (UPF), which supports a function of processing the network congestion-experienced packet, is selected by the SMF.

14. The AMF of claim 13, further comprising:
transmitting, to the radio access network (RAN), at least one of the QoS profile, the QFI, and the processing information associated with the network congestion-experienced packet.

15. The AMF of claim 13, further comprising:
receiving, from the RAN, information associated with whether processing of the network congestion-experienced packet is successfully activated in each of the RAN and the user equipment (UE).
